# EUROPEAN PATENT SPECIFICATION

(11) **EP 1 940 085 B1**
(45) Date of publication and mention of the grant of the patent: **05.06.2013**
(21) Application number: 07124055.0
(22) Date of filing: 24.12.2007
(51) Int. Cl.: H04L 12/28, H04L 12/46

(54) **Method and device for service binding**
Verfahren und Vorrichtung zur Dienstanbindung
Procédé et dispositif pour liaison de service

(30) Priority: 27.12.2006 CN 200610157769; 30.10.2007 WO PCT/CN2007/070988
(43) Date of publication of application: 02.07.2008
(73) Proprietor: Huawei Technologies Co., Ltd., Longgang District, Shenzhen Guangdong 518129 (CN)
(72) Inventor: Liu, Jun Huawei Administration Building,, 518129, Shenzhen (CN); Zhang, Xuejiang Huawei Administration Building,, 518129, Shenzhen (CN)
(74) Representative: Thun, Clemens

(56) References cited:
- EP-A- 1 826 957
- US-A1- 2002 027 906
- MOERMAN K ET AL: "UTAH'S UTOPIA: AN ETHERNET-BASED MPLS/VPLS TRIPLE PLAY DEPLOYMENT" IEEE COMMUNICATIONS MAGAZINE, IEEE SERVICE CENTER,NEW YORK, NY, US, vol. 43, no. 11, November 2005 (2005-11), pages 142-150, XP001238482 ISSN: 0163-6804

## Description

This application claims the benefits of Chinese patent application number 200610157769.X, entitled "METHOD AND DEVICE FOR SERVICE BINDING" and filed with the Chinese Patent Office on December 27, 2006 and International Application NO. PCT/CN2007/070988, filed October 30, 2007.

### Field of the Invention

The present invention relates to the field of communication technologies and in particular to a method and device for service binding.

### Background of the Invention

In Triple Play service, there are multiple service terminals in a home. At present, there are typically three terminals: one is a modem terminal for Internet service, one is a Set Top Box (STB) terminal for TV service, and another is a Voice over Internet Protocol (VoIP) terminal for Voice service. Different terminals have access to network equipment of an operator through a same network device, such as a Customer Premise Equipment (CPE) and a Home Gateway (HG).

A Triple Play user may have access to a network of a Network Service Provider (NSP) through a fixed line, and can be provided with a service from an Internet Service Provider (ISP). A currently used method is such that the NSP batch-dispatches fixed users to the ISP corresponding to the users directly with lines of the users through a tunnel, such as a Virtual Private LAN Service (VPLS), Mac in Mac, and QinQ. As an increasing number of ISPs provide the Triple Play service for end users, this fixed line based batch-dispatch makes it very difficult for the NSP to accomplish extensibility of a network and facilitated deployment of a service.

The DSL forum has proposed a method in which a personal service can be transferred transparently through a tunnel to a remote service processing device of the ISP, such as a Provider Edge (PE) device with provision of a data service, a TV service, and a VoIP service by binding of the user (layer-1 Q or layer-2 Q) with the VPLS or a Virtual Local Area Network (VLAN) tunnel through static configuration, by mapping the VLAN having access to a user into the corresponding VPLS, or by the N:1 method for VLAN.

In the Triple Play service, however, an end user may select different ISPs, provided that the user and an ISP reach an agreement with respect to the selection of the ISP. Typically, an ISP identifier is set directly in a terminal device (e.g., a set top box) to distinguish the ISP. A network service provider typically has already established for different ISPs Multi-Protocol Label Switching Virtual Private Network (MPLS VPN) channel (such as VPLS) for transferring transparently something to the end user, which inevitably requires that those different terminals in the family have to be online by adopting a same port, VLAN or inner layer or outer layer VLAN. This method may be limited largely in practical operation due to stringent and inflexible network planning. Additionally, this method requires strong association of a user with his physical location. Once a service provider is changed, the network has to be planned over again or configuration of an access device has to be changed, which may be disadvantageous to practical operation due to a high maintenance cost.

In EP 1 826 957 A1, techniques are described that allow a network device, such as a router, to dynamically build VLAN interfaces based on subscriber information strings included within packets. In particular, the network device comprises an interface controller and a forwarding controller, where the forwarding controller receives the packet over an Ethernet port and forwards the received packet to the interface controller. The packet includes both Ethernet tagging information and a subscriber information string. The interface controller comprises an Ethernet module that dynamically builds a primary virtual local area network (VLAN) sub-interface (PVS) based on the Ethernet tagging information. The Ethernet module also dynamically builds a subscriber VLAN sub-interface (SVS) based on the subscriber information string. The SVS allows the network device to distinguish between subscribers residing on the same VLAN, and, therefore, to provide subscriber specific services.

Further, in the technical solutions disclosed by the paper of Moerman K. et al.: "UTAH'S UTOPIA: An Ethernet-Based MPLS/VPLS Triple Play Deployment" in IEEE Comm. Mag., vol. 43, no. 11, November 2005, pages 142-150, when new services are requested, a service VLAN is created and simply added to the appropriate VPLS instance. Business intranet and extranet transparent LAN services (TLS) will also use Q-in-Q stacking to map service VLANs into existing VPLS instances. Service providers may also request other supported specific retail configuration enhancements on service VLANs like Dynamic Host Configuration Protocol (DHCP) Option 82, which allows them the ability to trace or designate dynamically allocated IP addresses and correlate them to specific physical geographic subscriber addresses.

### Summary of the Invention

Embodiments of the invention solve the problem of batch-dispatching of multiple dynamic ISP services.

A method for service binding includes establishing, by a Provider Edge, PE, a management Virtual Local Area Network, VLAN, corresponding to an Internet Service Provider, ISP; establishing, by the PE, on the management VLAN, a tunnel corresponding to the ISP, wherein the tunnel is identified with a Virtual Switching Instance, VSI, identifier on the PE; acquiring an ISP identifier carried in a message sent from a terminal and determining whether the ISP identifier matches the VSI identifier, by the PE, wherein the ISP identifier is added into the terminal according to a configuration of the ISP; and if the ISP identifier matches the VSI identifier, binding dynamically the terminal into the tunnel and transferring the message transparently in the tunnel to the ISP, by the PE.

An embodiment of the invention further provides a device for service binding including a tunnel establishing module, adapted to establish a management VLAN corresponding to an ISP, wherein on the management VLAN a tunnel corresponding to the ISP is established, and the tunnel is identified with a Virtual Switching Instance, VSI, identifier; an identification module, adapted to identify an ISP identifier carried in a message sent from a terminal, wherein the ISP identifier is added into the terminal according to a configuration of the ISP; and a binding module, adapted to determine whether the ISP identifier matches the VSI identifier, , bind dynamically the terminal into the tunnel if the ISP identifier matches the VSI identifier, and transfer the message transparently in the tunnel to the ISP.

The present invention accomplishes dynamic binding of a terminal with a service through identifying a service provider identifier of the terminal, thereby offering more flexible selection of a service for the end user, a reduced operation and maintenance cost of an operator, good extensibility of a network service and facilitated deployment of the service.

### Brief Descriptions of the Drawings

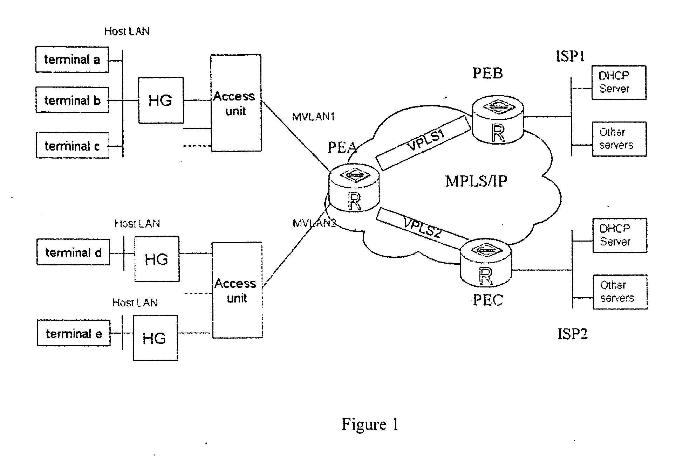

Figure 1 is a schematic diagram of networking according to embodiments of the invention.

### Detailed Descriptions of the Embodiments

A key for solving how an access device of a network service provider automatically discovers a binding relationship of an user terminal with an ISP, dynamically binds them, and therefore implements dynamic distribution of ISP services lies in that, instead of static configuration of a binding relationship of a terminal physical location with an MPLS VPN channel, the end user and the ISP can be dynamically associated by information on a user account, or information with special meaning (for example, the information can be acquired in a network access negotiation message of the user). Therefore, after the user selects different ISP operators, a service can be transferred transparently to a corresponding ISP if only a terminal or an ISP identifier in the terminal is modified in response to a request from the ISP (the terminal can carry ISP identification information during network access negotiation, and a upstream network device can identify an ISP from the ISP identification information) without planning or configuration over again of networking.

The invention is further described in detail as follows according to embodiments and drawings to make the objects, solutions and advantages of the invention more apparent.

A user device typically acquires an IP address through the Dynamic Host Configuration Protocol (DHCP), thereby having access to a network and requesting for a service. Therefore, the user terminal can carry ISP identification information of the requested service when initiating a DHCP negotiation request for a network access, thereby dynamically binding the user with an ISP.

There is an Options field in the structure of a DHCP message, and this field is an optional parameter field and can carry multifarious rich information. The DHCP Option 60 is a Vendor class identifier option defined in the RFC 2132 and is in a message format as follows:

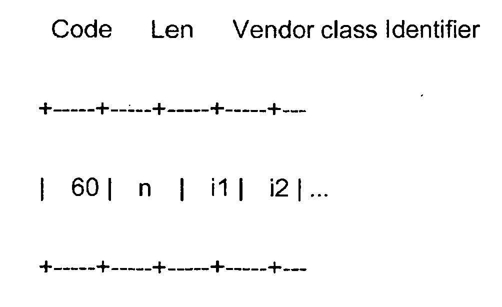

As illustrated in Figure 1 which is a schematic diagram of networking according embodiments of the invention, an ISP1 and an ISP2 represent two service providers both of which can provide various content services, such as Video on Demand (VOD), stream media, voice, and data. An operator provides the ISPs with an infrastructure network facility service, for example, provides a channel service through VPLS. As illustrated in Figure 1, a tunnel transparent transfer service is provided for the ISP1 through VPLS1 between a PEA and a PEB, and for the ISP2 through VPLS2 between the PEA and a PEC. Also, the PEA, the PEB and the PEC enable user management on behalf of the ISPs, and provide service such as user access, authentication, and billing. Listed in Figure 1 are three terminals, a terminal a, a terminal b and a terminal c in one home, and two terminals, a terminal d and a terminal e in another home. These terminals have access to devices of an operator network through a home network equipment (CPE or HG), and further transfer transparently to the PEB and the PEC through the VPLS network between the PEs. The PEB and the PEC are in turn connected to various servers of the ISP, such as a DHCP Server, a File Transfer Protocol (FTP) server, and a VOD server.

A detailed solution for dynamically binding into a VPLS tunnel (or another layer-2 tunnel, such as a Mac in Mac tunnel, and a VLAN layer-2 tunnel) on the basis of the DCHP Option 60 so as to implement service binding is described below.

The PEA establishes a management VLAN (a dedicated VLAN with a management function, i.e. an MVLAN) on the device to which the user has access, such as an MVLAN1 and an MVLAN2. The management VLAN corresponds to the ISP. VPLS tunnels, i.e. VPLS1 and VPLS2, are established in advance respectively for the ISP1 and the ISP2 on the management VLANs, which may be identified on the PEA with VSI-ISP1 and VSI-ISP2, respectively. The VSI (Virtual Switching Instance) identifiers are identical to the ISP identifiers configured for the user terminal by the ISPs. The user may have an access through either layer-1 Q or layer-2 Q (QinQ).

The main function of the management VLAN is to create a correspondence relationship between the VLAN interface and the ISP, thereby creating the VPLS tunnel corresponding to the ISP. The management VLAN can be replaced by any entity which has the same function as the management VLAN.

In the user terminal or the CPE or HG, an ISP identifier for network access is added according to configuration of the ISP. This identifier, simply referred to as a service provider identifier hereinafter, is carried through the DHCP Option 60.

When initiating a DHCP negotiation request during the process of network accessing, the user terminal carries the ISP identifier in the DHCP Option 60, and sends the ISP identifier to the PEA.

The PEA acquires the ISP identifier in the DCHP negotiation message from the user through DHCP Snooping, and determines whether it matches a VSI-ISP identifier already configured. If it does not match, then the PEA discards the message. If it can match a VSI-ISP identifier, then the PEA adds dynamically the user into the VPLS tunnel, and transfers transparently the DHCP message to a corresponding ISP in the VPLS tunnel.

Upon snooping about and acquiring the DHCP Option 60 for the first time, the PEA creates for the user various control table items related to service message forwarding, which include a table item of binding of a VSI with a VLAN (either layer-1 Q or layer-2 Q) to which the user has access, a table item of learning of a user source MAC address, and a table item of binding of IP+VLAN+MAC+PORT (the VLAN may be either layer-1 Q or layer-2 Q). The table item of binding of a VSI with a VLAN to which the user has access is used for implementing dynamic binding of the user with a VPLS tunnel, the table item of learning of a user source MAC address is used for forwarding various messages from the ISP to the user by the VPLS, and the table item of binding of IP+VLAN+MAC+PORT can be used for security check of the user to prevent an illegal user from being an impostor, and can also be used for preventing the user from applying for excessive IP addresses.

Dynamic binding of the user terminal with an ISP service is accomplished through the above steps, and thus the user terminal can transmit /receive normally a service message to/from the ISP.

More preferably, after the user is authenticated and gains a network access, an automatic aging period is set on the PEA for the table item of binding of a VSI with a VLAN to which the user has access. This can be accomplished through either adding an option Lease Time or multiplexing an option 51 in the DHCP protocol. In other words, when the option 60 and the option 51 coexist, an IP Address Lease Time of the DHCP is regarded as an aging period of binding of the user with an ISP. The period of the option 51 can be set in a length of 32 bits and in second.

After the user terminal terminates the network access, the table item of learning on a user source MAC address and the table item of binding of IP+VLAN+MAC+PORT on the PE age automatically.

More preferably, in order to prevent that the MAC address of an ISP server has not been learned on the PEA when a user visits an ISP, the ISP shall send periodically gratuitous Address Resolution Protocol (ARP) message in a VSI for various servers. This function can be supplied by a PE device or a Broadband Access Server (BAS) device at the ISP side. Also, the PEA shall broadcast the gratuitous ARP message in the user VLAN. For QinQ, the PEA can broadcast the gratuitous ARP message in outer Q, and then a lower-layer joining device can duplicate the gratuitous ARP message in inner Q.

More preferably, the PE at the ISP side can also function as a BAS (the BAS can also be disposed outside of the PE) which issues periodically an ARP probing message to the user in order to detect whether the user with a network access is online. In this case, the PE at the user side (e.g., the PEA) may be faced with a problem of broadcasting of all of a huge number of users in the VSI, which may result in a broadcast storm. In order to avoid this problem, the PE at the user side first searches for a table item of binding of IP+VLAN+MAC+PORT according to IP+VLAN upon reception of the ARP probing message. If the table item is found, then the PE can locate a specific port, and forward the ARP message to the port. If the table item can not be found, which indicates that the user has already been offline, then the PE discards the ARP message. The aging period of the table item of binding of IP+VLAN+MAC+PORT can be set a little longer than the period of the ARP probing message in order to prevent a misreport.

Further in the present embodiment, VPLS can be replaced either by Virtual Private Wire Service (VPWS) or Pseudo Wire Emulation Edge-to-Edge (PWE3) or by other layer-2 technologies, such as Mac in Mac and a layer-2 VLAN switching network.

A device embodiment includes a tunnel establishing module, an identification module, a binding module, a table item control module, and an aging module.

The tunnel establishing module is adapted to establish a management VLAN and establish a tunnel through the management VLAN, which is described as follows with reference to Figure 1.

The tunnel establishing module establishes a management VLAN (MVLAN), such as an MVLAN1 and an MVLAN2. The management VLAN corresponds to an ISP service provider identifier. VPLS tunnels, i.e. VPLS1 and VPLS2, are established in advance respectively for an ISP1 and an ISP2 on the management VLANs, which are identified on the PEA with VSI-ISP1 and VSI-ISP2, respectively. The VSI identifiers are identical to the ISP identifiers configured for the user terminal by the ISPs. The user terminal can have an access through either layer-1 Q or layer-2 Q (QinQ).

The identification module is adapted to identify a service provider identifier of the terminal and determine a management VLAN according to the identifier. Specifically, the module acquires an ISP identifier in a DHCP negotiation message from the user through DHCP Snooping, and determines whether it matches a VSI-ISP identifier already configured. If it does not match, then the module discards the message. If it can match a VSI-ISP identifier, then the module can find a corresponding management VLAN.

The binding module is adapted to bind the terminal into a corresponding tunnel according to the identified service provider identifier. In other words, the module identifies a corresponding ISP tunnel according to the determined management VLAN, and binds dynamically the user terminal into the VPLS tunnel, so that the module can transfer transparently a DHCP message to a corresponding ISP in the VPLS tunnel.

The table item control module is adapted to create a related table item according to a result from the binding module. Specifically, upon snooping about and acquiring the DHCP Option 60 for the first time, the module creates for the user various control table items related to service message forwarding, which include a table item of binding of a VSI with a VLAN (either layer-1 Q or layer-2 Q) to which the user has access, a table item of learning of a user source MAC address, and a table item of binding of IP+VLAN+MAC+PORRT (the VLAN may be either layer-1 Q or layer-2 Q).

The aging module is adapted to age the table item of the control table.

The embodiments accomplish dynamic binding of a terminal with an ISP service through identifying a service provider identifier of the terminal, thereby resulting in more flexible selection of a service for the end user, a reduced operation and maintenance cost of an operator, good extensibility of a network service and facilitated deployment of the service.

The above descriptions are merely illustrative of the embodiments of the invention, and the protection scope of the present invention shall not be limited to those. Variations or substitutions which can readily occur to those skilled in the art in light of the invention shall be encompassed in the protection scope of the present invention. Accordingly, the protection scope of the present invention shall be defined in accordance with the appended claims.

## Claims

1. A method for service binding, comprising:
establishing, by a Provider Edge, PE, a management Virtual Local Area Network, VLAN, corresponding to an Internet Service Provider, ISP;
establishing, by the PE, on the management VLAN, a tunnel corresponding to the ISP, wherein the tunnel is identified with a Virtual Switching Instance, VSI, identifier on the PE;
**characterized in that** the method further comprises:
acquiring an ISP identifier carried in a message sent from a terminal and determining whether the ISP identifier matches the VSI identifier, by the PE, wherein the ISP identifier is added into the terminal according to a configuration of the ISP; and
if the ISP identifier matches the VSI identifier, binding dynamically the terminal into the tunnel and transferring the message transparently in the tunnel to the ISP, by the PE.

2. The method according to claim 1, wherein
the ISP identifier is carried in a negotiation request initiated by the terminal during the process of network accessing.

3. The method according to claim 2, wherein
the negotiation request is carried in a Dynamic Host Configuration Protocol, DHCP, request message, and the ISP identifier is set in a field of DHCP option 60.

4. The method according to claim 1 wherein the tunnel is a layer-2 tunnel.

5. The method according to claim 4, wherein the layer-2 tunnel comprises a Virtual Private LAN service, VPLS, tunnel, a Virtual Private Wire Service, VPWS, tunnel, a Pseudo Wire Emulation Edge-to-Edge, PWE3, tunnel, a Mac in Mac tunnel or a VLAN layer-2 tunnel.

6. The method according to claim 2, wherein upon snooping about and acquiring the negotiation request carrying the ISP identifier, the method further comprises creating a control table item for service message forwarding.

7. The method according to claim 6, wherein the control table item for service message forwarding comprises a table item of binding of a Virtual Switching Instance, VSI, with a VLAN to which the user has access and a table item of learning of a user source Media Access Control, MAC, address.

8. The method according to claim 7, wherein the control table item further comprises a table item of binding of Internet Protocol, IP, VLAN, MAC and PORT.

9. The method according to claim 6, further comprising setting an aging period for the control table item.

10. The method according to claim 1, further comprising issuing periodically a gratuitous Address Resolution Protocol, ARP, message, which is broadcast in a user VLAN.

11. The method according to claim 10, wherein an entity which issues periodically a gratuitous ARP message is an ISP, or a Provider Edge, PE, device or Broadband Access Server, BAS, at the ISP side.

12. The method according to claim 8, wherein upon reception of an ARP probing message, a PE at the user side searches for the table item of binding of IP, VLAN, MAC and PORT according to binding of IP and VLAN; and if the table item is found, the PE forwards the ARP probing message to a port to detect whether the user is online; otherwise, the PE discards the ARP probing message.

13. A device for service binding, comprising:
a tunnel establishing module, adapted to establish a management VLAN corresponding to an ISP, wherein on the management VLAN a tunnel corresponding to the ISP is established, and the tunnel is identified with a Virtual Switching Instance, VSI, identifier;
**characterized in that** the device further comprises:
an identification module, adapted to identify an ISP identifier carried in a message sent from a terminal, wherein the ISP identifier is added into the terminal according to a configuration of the ISP; and
a binding module, adapted to determine whether the ISP identifier matches the VSI identifier, , bind dynamically the terminal into the tunnel if the ISP identifier matches the VSI identifier, and transfer the message transparently in the tunnel to the ISP.

14. The device according to claim 13, further comprising:
a table item control module, adapted to create a control table item for service message forwarding.

15. The device according to claim 14, wherein the control table item for service message forwarding comprises a table item of binding of a VSI with a VLAN to which the user has access and a table item of learning on a user source MAC address.

16. The device according to claim 15, wherein the control table item further comprises a table item of binding of IP, VLAN, MAC and PORT.

17. The device according to claim 16, further comprising:
an aging module, adapted to perform an aging control on the table item of the control table.

18. The device according to claim 17, further comprising:
an ARP message broadcasting module, adapted to send periodically gratuitous ARP message in a user VLAN.

19. The device according to claim 18, further comprising:
an ARP probing message processing module, adapted to search for the table item of binding of IP, VLAN, MAC and PORT according to binding of IP and VLAN upon reception of the ARP probing message, to forward the ARP probing message to a port if the table item is found to detect whether the user is online and discard the ARP probing message if the table item is not found.

## Patentansprüche

1. Verfahren zur Dienstanbindung, umfassend:
Herstellen eines Virtual Local Area Network VLAN zur Verwaltung, das einem Internet Service Provider ISP entspricht durch eine Provider Edge PE;
Herstellen eines dem ISP entsprechenden Tunnels in dem Verwaltungs-VLAN durch die PE, wobei der Tunnel mit einer Kennung der Virtual Switching Instance VSI auf der PE identifiziert wird;
**dadurch gekennzeichnet, dass** das Verfahren ferner Folgendes umfasst:
Beschaffen einer ISP-Kennung, die in einer von einem Endgerät gesendeten Nachricht geführt wird, und Bestimmen, ob die ISP-Kennung mit der VSI-Kennung übereinstimmt, durch die PE, wobei die ISP-Kennung gemäß einer Konfiguration des ISP in das Endgerät hinzugefügt wird; und
wenn die ISP-Kennung mit der VSI-Kennung übereinstimmt, dynamisches Binden des Endgeräts in den Tunnel und transparentes Transferieren der Nachricht in dem Tunnel zu dem ISP durch die PE.

2. Verfahren nach Anspruch 1, wobei
die ISP-Kennung in einer Aushandlungsanforderung geführt wird, die durch das Endgerät während des Prozesses des Netzwerkzugriffs eingeleitet wird.

3. Verfahren nach Anspruch 2, wobei
die Aushandlungsanforderung in einer Anforderungsnachricht des Dynamic Host Configuration Protocol DHCP geführt wird und die ISP-Kennung in einem Feld der DHCP-Option 60 gesetzt wird.

4. Verfahren nach Anspruch 1, wobei der Tunnel ein Layer-2-Tunnel ist.

5. Verfahren nach Anspruch 4, wobei der Layer-2-Tunnel einen Tunnel des Virtual Private LAN Service bzw. VPLS, einen Tunnel des Virtual Private Wire Service bzw. VPWS, einen Tunnel der Pseudo Wire Emulation Edge-to-Edge bzw. PWE3, einen Mac-in-Mac-Tunnel oder einen VLAN-Layer-2-Tunnel umfasst.

6. Verfahren nach Anspruch 2, wobei nach dem Snooping über die und Beschaffen der die ISP-Kennung führenden Aushandlungsanforderung, das Verfahren ferner das Erzeugen eines Steuertabellenpostens zur Dienstnachrichtenweiterleitung umfasst.

7. Verfahren nach Anspruch 6, wobei der Steuertabellenposten zur Dienstnachrichtenweiterleitung einen Tabellenposten des Bindens einer Virtual Switching Instance VSI mit einem VLAN, auf das der Benutzer Zugriff hat, und einen Tabellenposten des Erfahrens einer Adresse der Media Access Control bzw. MAC einer Benutzerquelle umfasst.

8. Verfahren nach Anspruch 7, wobei der Steuertabellenposten ferner einen Tabellenposten des Bindens von Internet Protocol IP, VLAN, MAC und PORT umfasst.

9. Verfahren nach Anspruch 6, das ferner das Setzen einer Alterungsperiode für den Steuertabellenposten umfasst.

10. Verfahren nach Anspruch 1, das ferner das periodische Ausgeben einer unaufgeforderten Nachricht des Address Resolution Protocol ARP umfasst, die in einem Benutzer-VLAN rundgesendet wird.

11. Verfahren nach Anspruch 10, wobei eine Entität, die periodisch eine unaufgeforderte ARP-Nachricht ausgibt, eine Einrichtung des ISP oder eine Provider Edge PE oder ein Broadband Access Server BAS auf der ISP-Seite ist.

12. Verfahren nach Anspruch 8, wobei beim Empfang einer ARP-Sondierungsnachricht eine PE auf der Benutzerseite nach dem Tabellenposten des Bindens von IP, VLAN, MAC und Port gemäß dem Binden von IP und VLAN sucht; und wenn der Tabellenposten gefunden ist, die PE die ARP-Sondierungsnachricht zu einem Port weiterleitet, um zu detektieren, ob der Benutzer online ist; und andernfalls die PE die ARP-Sondierungsnachricht verwirft.

13. Einrichtung zur Dienstanbindung, umfassend:
ein Tunnelherstellungsmodul, das dafür ausgelegt ist, ein Verwaltungs-VLAN herzustellen, das einem ISP entspricht, wobei in dem Verwaltungs-VLAN ein dem ISP entsprechender Tunnel hergestellt wird und der Tunnel mit einer Kennung der Virtual Switching Instance VSI identifiziert wird;
**dadurch gekennzeichnet, dass** die Einrichtung ferner Folgendes umfasst:
ein Identifikationsmodul, das dafür ausgelegt ist, eine in einer von einem Endgerät gesendeten Nachricht geführte ISP-Kennung zu identifizieren, wobei die ISP-Kennung gemäß einer Konfiguration des ISP in das Endgerät hinzugefügt wird; und ein Bindemodul, das dafür ausgelegt ist, zu bestimmen, ob die ISP-Kennung mit der VSI-Kennung übereinstimmt, das Endgerät dynamisch in den Tunnel zu binden,
wenn die ISP-Kennung mit der VSI-Kennung übereinstimmt, und die Nachricht transparent in den Tunnel zu dem ISP zu transferieren.

14. Einrichtung nach Anspruch 13, ferner umfassend:
ein Tabellenpostensteuermodul, das dafür ausgelegt ist, einen Steuertabellenposten für Dienstnachrichtenweiterleitung zu erzeugen.

15. Einrichtung nach Anspruch 14, wobei der Steuertabellenposten für Dienstnachrichtenweiterleitung einen Tabellenposten des Bindens einer VSI mit einem VLAN, auf das der Benutzer Zugriff hat, und einen Tabellenposten des Erfahrens bezüglich einer Benutzerquellen-MAC-Adresse umfasst.

16. Einrichtung nach Anspruch 15, wobei der Steuertabellenposten ferner einen Tabellenposten des Bindens von IP, VLAN, MAC und PORT umfasst.

17. Einrichtung nach Anspruch 16, ferner umfassend:
ein Alterungsmodul, das dafür ausgelegt ist, eine Alterungssteuerung an dem Tabellenposten der Steuertabelle auszuführen.

18. Einrichtung nach Anspruch 17, ferner umfassend:
ein ARP-Nachrichtenrundsendemodul, das dafür ausgelegt ist, periodisch eine unaufgeforderte ARP-Nachricht in einem Benutzer-VLAN zu senden.

19. Einrichtung nach Anspruch 18, ferner umfassend:
ein ARP-Sondierungsnachrichten-Verarbeitungsmodul, das dafür ausgelegt ist, beim Empfang der ARP-Sondierungsnachricht, nach dem Tabellenposten des Bindens von IP, VLAN, MAC und PORT gemäß dem Binden von IP und VLAN zu suchen, um die ARP-Sondierungsnachricht zu einem Port weiterzuleiten, wenn der Tabellenposten gefunden wird, um zu detektieren, ob der Benutzer online ist, und die ARP-Sondierungsnachricht zu verwerfen, wenn der Tabellenposten nicht gefunden wird.

## Revendications

1. Procédé permettant une liaison de services, comprenant les étapes suivantes :
établir, par un dispositif de périphérie fournisseur, PE, un réseau local virtuel, VLAN, de gestion correspondant à un fournisseur d'accès Internet, ISP ;
établir, par le PE, sur le VLAN de gestion, un tunnel correspondant à l'ISP, le tunnel étant identifié avec un identifiant d'instance de commutation virtuelle, VSI, sur le PE;
**caractérisé en ce qu'**il comprend en outre :
acquérir un identifiant ISP contenu dans un message envoyé à partir d'un terminal et déterminer si l'identifiant ISP correspond à l'identifiant VSI, par le PE, l'identifiant ISP étant ajouté dans le terminal selon une configuration de l'ISP ; et
si l'identifiant ISP correspond à l'identifiant VSI, lier dynamiquement le terminal au tunnel et transférer le message de façon transparente dans le tunnel jusqu'à l'ISP, par le PE.

2. Procédé selon la revendication 1, dans lequel :
l'identifiant ISP est contenu dans une requête de négociation initiée par le terminal durant le processus d'accès réseau.

3. Procédé selon la revendication 2, dans lequel :
la requête de négociation est contenue dans un message de requête de protocole de configuration d'hôte dynamique, DHCP, et l'identifiant ISP est inclus dans un champ de l'option DHCP 60.

4. Procédé selon la revendication 1, dans lequel le tunnel est un tunnel de couche 2.

5. Procédé selon la revendication 4, dans lequel le tunnel de couche 2 comprend un tunnel de service LAN privé virtuel, VPLS, un tunnel de service câblé privé virtuel, VPWS, un tunnel périphérie à périphérie de pseudo émulation câblée, PWE3, un tunnel Mac dans Mac ou un tunnel de couche 2 VLAN.

6. Procédé selon la revendication 2, dans lequel lors de la détection et de l'acquisition de la requête de négociation contenant l'identifiant ISP, le procédé consiste en outre à créer un élément de table de commande destiné à l'envoi de messages de service.

7. Procédé selon la revendication 6, dans lequel l'élément table de commande destiné à l'envoi de messages de service comprend un élément table de liaison d'une instance de commutation virtuelle, VSI, avec un VLAN auquel l'utilisateur a accès et un élément table d'apprentissage d'une adresse de contrôle d'accès au support, MAC, source utilisateur.

8. Procédé selon la revendication 7, dans lequel l'élément table de commande comprend en outre un élément table de liaison de protocole Internet, IP, VLAN, MAC et PORT.

9. Procédé selon la revendication 6, comprenant en outre l'étape consistant à définir une période d'expiration pour l'élément table de commande.

10. Procédé selon la revendication 1, comprenant en outre l'étape consistant à envoyer périodiquement un message de protocole de résolution d'adresse, ARP, gratuit, qui est diffusé dans un VLAN utilisateur.

11. Procédé selon la revendication 10, dans lequel une entité qui émet périodiquement un message ARP gratuit est un ISP, ou un dispositif de périphérie fournisseur, PE, ou un serveur d'accès à large bande, BAS, côté ISP.

12. Procédé selon la revendication 8, dans lequel lors de la réception d'un message de vérification ARP, un PE côté utilisateur recherche l'élément table de liaison de IP, VLAN, MAC et PORT selon une liaison de IP et VLAN ; et si l'élément table est trouvé, le PE envoie le message de vérification ARP à un port pour détecter si l'utilisateur est en ligne ; dans le cas contraire, le PE rejette le message de vérification ARP.

13. Dispositif permettant une liaison de services, comprenant :
un module d'établissement de tunnel, conçu pour établir un VLAN de gestion correspondant à un ISP, un tunnel correspondant à l'ISP étant établi sur le VLAN de gestion, et le tunnel étant identifié avec un identifiant d'instance de commutation virtuelle, VSI ;
**caractérisé en ce que** le dispositif comprend en outre :
un module d'identification, conçu pour identifier un identifiant ISP contenu dans un message envoyé à partir d'un terminal, l'identifiant ISP étant ajouté dans le terminal selon une configuration de l'ISP ; et
un module de liaison, conçu pour déterminer si l'identifiant ISP correspond à l'identifiant VSI, lier dynamiquement le terminal au tunnel si l'identifiant ISP correspond à l'identifiant VSI, et transférer le message de façon transparente dans le tunnel jusqu'à l'ISP.

14. Dispositif selon la revendication 13, comprenant en outre :
un module de commande d'élément table, conçu pour créer un élément table de commande destiné à l'envoi de messages de service.

15. Dispositif selon la revendication 14, dans lequel l'élément table de commande destiné à l'envoi de messages de service comprend un élément table de liaison d'un VSI avec un VLAN auquel l'utilisateur a accès et un élément table d'apprentissage sur une adresse MAC source utilisateur.

16. Dispositif selon la revendication 15, dans lequel l'élément table de commande comprend en outre un élément table de liaison de IP, VLAN, MAC et PORT.

17. Dispositif selon la revendication 16, comprenant en outre :
un module d'expiration, conçu pour exécuter une commande d'expiration sur l'élément table de la table de commande.

18. Dispositif selon la revendication 17, comprenant en outre :
un module de diffusion de message ARP, conçu pour envoyer périodiquement un message ARP gratuit dans un VLAN utilisateur.

19. Dispositif selon la revendication 18, comprenant en outre :
un module de traitement de message de vérification ARP, conçu pour rechercher l'élément table de liaison de IP, VLAN, MAC et PORT selon une liaison de IP et VLAN lors de la réception du message de vérification ARP, pour envoyer le message de vérification ARP à un port si l'élément table est trouvé afin de détecter si l'utilisateur est en ligne et de rejeter le message de vérification ARP si l'élément table n'est pas trouvé.
